# EUROPÄISCHE PATENTSCHRIFT

(11) **EP 0 514 695 B1**
(45) Veröffentlichungstag und Bekanntmachung des Hinweises auf die Patenterteilung: **15.07.1998**
(21) Anmeldenummer: 92107332.6
(22) Anmeldetag: 29.04.1992
(51) Int. Cl.: H04M 19/04

(54) **Fernsprechapparat mit Ruftonabschaltung**
Telephone set with ring tone inhibit circuit
Poste téléphonique avec circuit de blocage de sonnerie

(30) Priorität: 21.05.1991 DE 4116469
(43) Veröffentlichungstag der Anmeldung: 25.11.1992
(73) Patentinhaber: ALCATEL ALSTHOM COMPAGNIE GENERALE D'ELECTRICITE, 75008 Paris (FR)
(72) Erfinder: Elsässer, Martin, W-7254 Hemmingen (DE)
(74) Vertreter: Knecht, Ulrich Karl, Dipl.-Ing.

(56) Entgegenhaltungen:
- EP-A- 0 052 835
- US-A- 4 409 439
- US-A- 4 644 106
- US-A- 4 856 055

## Beschreibung

Die Erfindung betrifft einen Fernsprechapparat nach dem Oberbegriff von Anspruch 1 und nach dem Oberbegriff des Anspruchs 2.

Aus dem Stand der Technik US 4,409,439 ist ein Telefonsystem bekannt, welches eine zusätzliche Ruftonwiedergabeanordnung aufweist, deren hörbare Ausgabe eines Ruftones von einem Benutzer kontrolliert werden kann. Der Benutzer kann den Rufton wahlweise für acht Stunden oder für eine oder zwei Stunden abschalten. Ebenfalls kann eine zeitverzögerte Unterdrückung des Ruftones erfolgen, was bedeutet, daß beispielsweise ab dem vierten Rufton jeder weitere Rufton unterdrückt wird. Ein solcher Apparat wird als Zusatzgerät zu einem Standardtelefon ausgebildet, wobei bei dem Telefon das Ruftonabstrahlorgan abgeschaltet sein muß.

Mit allgemein bekannten Fernsprechapparaten ist es möglich, jenen Dienst in Anspruch zu nehmen, den moderne öffentliche Vermittlungsstellen und Fernsprechnebenstellenanlagen unter dem Namen "Ruhe vor dem Telefon" anbieten (siehe K. Bergmann, "Lehrbuch der Fenmeldetechnik", Fachverlag Schiele & Schön GmbH, Berlin, 1985, Seite 673). Voraussetzung dazu ist natürlich, daß der Fernsprechapparat an eine solche Vermittlungsstelle oder Nebenstellenanlage angeschlossen ist.

Beim genannten Dienst "Ruhe vor dem Telefon" kann der Teilnehmer seinen Anschluß gegen ankommende Anrufe sperren lassen. Er muß dies aber tun, bevor die unerwünschten Anrufe kommen. Außerdem muß er daran denken, die Sperrung wieder aufheben zu lassen.

Die Aufgabe wird wie in Anspruch 1 und wie in Anspruch 2 angegeben gelöst.

Bevor die erfindungsgemäße Lösung näher beschrieben wird, sollen noch einige Begriffe definiert werden:
- "Zentrale" ist Teil einer öffentlichen Vermittlungsstelle oder einer Fernsprechnebenstellenanlage.
- "Mehrfachsignalisierung" soll heißen, daß bei einem an den betroffenen Fernsprechapparat gerichteten Anrufversuch ein Rufsignal von der Zentrale an den Fernsprechapparat gesendet wird, das aus periodisch eintreffenden Signalen (z.B. einer periodisch auftretenden Wechselspannung) besteht.
- "Einfachsignalisierung" soll heißen, daß bei einem an den betroffenen Fernsprechapparat gerichteten Anrufversuch ein Rufsignal von der Zentrale an den Fernsprechapparat gesendet wird, das aus einer einzigen Signalisierinformation, die den Befehl zur Aussendung eines Ruftons enthält, besteht.

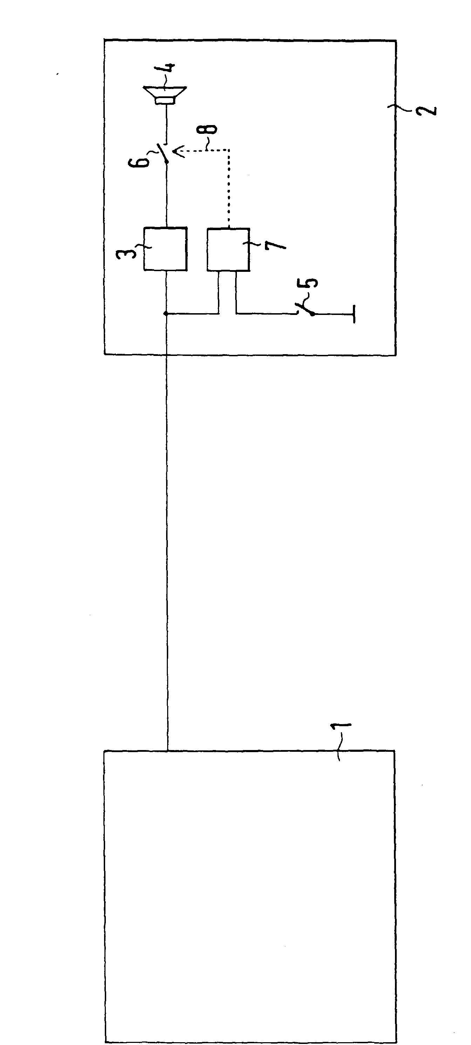

Je ein Ausführungsbeispiel des erfindungsgemäßen Fernsprechapparates für den Einsatz in einem Telefonnetz mit Mehrfach- bzw.
Einfachsignalisierung werden im folgenden anhand der einzigen Zeichnung erklärt.

Die genannte Zeichnung zeigt schematisch einen erfindungsgemäßen Fernsprechapparat nach Anspruch 1. Man sieht darin eine Zentrale 1 und einen erfindungsgemäßen Fernsprechapparat 2 mit einem Rufsignalempfänger 3, einem Rufabstrahlorgan 4, einer Eingabevorrichtung, hier dargestellt durch einen Schalter 5, einem weiteren Schalter 6, einer Steuereinheit 7 und einer Steuerleitung 8.

Im folgenden soll die Funktionsweise eines solchen Fernsprechapparats erklärt werden für den Fall, daß er für ein Telefonsystem mit Mehrfachsignalisierung ausgelegt ist. In diesem Fall soll die Steuereinheit 7 bevorzugterweise ein Zeitglied enthalten.

Im Verlauf eines Anrufversuchs an diesen Fernsprechapparat sendet die Zentrale 1 ein periodisch auftretendes Rufsignal zum Fernsprechapparat. Der Rufsignalempfänger 3 empfängt dieses Rufsignal und sendet es in geeigneter Form an das Rufabstrahlorgan 4 weiter. Gleichzeitig empfängt auch die Steuereinheit 7 entweder direkt von der Zentrale 1 (so wie in der Zeichnung beispielhaft dargestellt) oder indirekt über den Rufsignalempfänger das Rufsignal. Dies ist wichtig aus weiter unten erklärten Gründen.

Das Rufabstrahlorgan 4 erzeugt einen Rufton, sowie es ein geeignetes Rufsignal von dem Rufsignalempfänger 3 erhält. Wünscht der Angerufene diesen Rufton zu unterdrücken, so betätigt er die Eingabevorrichtung 5. Dadurch wird das in der Steuereinheit 7 enthaltene Zeitglied gesetzt. Bei gesetztem Zeitglied setzt die Steuereinheit 7 das Rufabstrahlorgan 4 außer Betrieb. Dies kann, so wie in der Zeichnung beispielhaft dargestellt, durch die Unterbrechung der Verbindung zwischen dem Rufsignalempfänger 3 und dem Rufabstrahlorgan 4 mit Hilfe des Schalters 6 bewerkstelligt werden. Dabei wird der Schalter 6 vom Ausgang der Steuereinheit 7 über eine Steuerleitung 8 gesteuert. Sobald das Zeitglied sich wieder im ungesetzten Zustand befindet, setzt die Steuereinheit 7 das Abstrahlorgan 4 wieder in betriebsbereiten Zustand.

Das Zeitglied bleibt bis zum Verstreichen seiner Ablaufzeit gesetzt. Die Ablaufzeit kann entweder vom Hersteller fest eingestellt worden sein oder vom Fernsprechapparatbenutzer einstellbar sein. Handelt es sich um ein retriggerbares Zeitglied, so wird es, solange es im gesetzten Zustand ist, durch jeden neuen Eingang des Rufsignals wieder getriggert. Dazu ist es notwendig, daß die Steuereinheit 7 das Rufsignal wie oben erklärt erhält. Wünscht man also, daß die Ruftonunterdrückung für die Dauer des laufenden Anrufversuches anhält, so muß die Ablaufzeit des Zeitglieds größer gewählt werden als die Periode, mit der das von der Zentrale kommende Rufsignal auftritt. Sobald das Zeitglied 7 sich wieder im ungesetzten Zustand befindet, kann der Rufsignalempfänger 3 das Rufabstrahlorgan 4 gegebenenfalls (d.h. im Fall eines neuen Anrufversuchs) wieder in Betrieb setzen.

Im weiteren soll die Funktionsweise eines solchen Fernsprechapparates erklärt werden für den Fall, daß er für ein Telefonsystem mit Einfachsignalisierung ausgelegt ist. Dies ist ein Ausführungsbeispiel gemäß Anspruch 2. In diesem Fall soll die Steuereinheit 7 ein bistabiles Schaltelement enthalten. Wenn das bistabile Schaltelement gesetzt ist, so befindet sich die Steuereinheit in einem sogenannten zweiten Zustand. Wenn das bistabile Schaltelement zurückgesetzt ist, so befindet sie sich in einem sogenannten ersten Zustand.

Im Verlauf eines Anrufversuchs an diesen Fernsprechapparat sendet die Zentrale 1 eine Signalisierinformation, die den Befehl zum Erzeugen eines Ruftons enthält, zum Fernsprechapparat. Der Rufsignalempfänger 3 empfängt dieses Rufsignal und sendet es in geeigneter Form an das Rufabstrahlorgan 4 weiter. Gleichzeitig empfängt auch die Steuereinheit 7 entweder direkt von der Zentrale 1 (so wie in der Zeichnung beispielhaft dargestellt) oder indirekt über den Rufsignalempfänger die Signalisierinformation. Die Steuereinheit 7 setzt daraufhin das in ihr enthaltene bistabile Schaltelement zurück. Das Rufabstrahlorgan 4 erzeugt einen Rufton, sowie es ein geeignetes Rufsignal von dem Rufsignalempfänger 3 erhält. Wünscht der Angerufene diesen Rufton zu unterdrücken, so betätigt er die Eingabevorrichtung 5. Dadurch wird das bistabile Schaltelement gesetzt. Wenn das bistabile Schaltelement gesetzt ist, setzt die Steuereinheit 7 das Rufabstrahlorgan 4 außer Betrieb. Dies kann, so wie in der Zeichnung beispielhaft dargestellt, durch die Unterbrechung der Verbindung zwischen dem Rufsignalempfänger 3 und dem Rufabstrahlorgan 4 mit Hilfe des Schalters 6 bewerkstelligt werden. Dabei wird der Schalter 6 vom Ausgang der Steuereinheit 7 über eine Steuerleitung 8 gesteuert. Sobald eine neue Signalisierinformation von der Zentrale 1 zum Fernsprechapparat kommt, wird das bistabile Schaltelement zurückgesetzt, und die Steuereinheit 7 setzt das Abstrahlorgan 4 wieder in betriebsbereiten Zustand. Somit ist gewährleistet, daß die Unterdrückung des Ruftons nach Betätigung der Eingabevorrichtung für und nur für die Dauer des laufenden Anrufversuchs anhält.

In beiden Fällen, d.h. für den Einsatz für Mehrfachsignalisierung sowie Einfachsignalisierung, wäre es auch als erfindungsgemäß zu betrachten, wenn das von der Zentrale kommende Rufsignal (bzw. die Signalisierinformation) von der Steuereinheit nicht direkt, sondern über den Rufsignalempfänger und in veränderter Form empfangen würde.

Statt eines Schalters kann die Eingabevorrichtung auch eine Taste des normalen Tastwahlblocks des Fernsprechapparats oder eine Sondertaste oder irgend ein anderes entsprechendes Betätigungsmittel, z.B. auch ein fernsteuerbares, sein.

Die Steuereinheit kann auch ein Mikroprozessor sein, bei dem die beschriebenen Funktionen programmgesteuert sind.

## Patentansprüche

1. Fernsprechapparat (2) bei dem eine Rufabstrahlung entweder für eine vorgegebene Zeit oder für die Dauer eines laufenden Anrufs außer Betrieb gesetzt ist **dadurch gekennzeichnet,**
daß der Fernsprechapparat (2) einen Rufsignalempfänger (3), ein Rufabstrahlorgan (4), eine Eingabevorrichtung (5) und eine Steuereinheit (7) mit einem retriggerbaren Zeitglied enthält und daß nach Eingang eines Rufsignals bei Betätigung der Eingabevorrichtung (5) das retriggerbare Zeitglied in der Steuereinheit (7) für eine vorgegebene Zeit gesetzt wird und daß, während das retriggerbare Zeitglied gesetzt ist, das Rufabstrahlorgan (4) außer Betrieb ist und das retriggerbare Zeitglied (3) von ankommenden Rufsignalen wieder retriggerbar ist.

2. Fernsprechapparat (2) bei dem eine Rufabstrahlung entweder für eine vorgegebene Zeit oder für die Dauer eines laufenden Anrufs außer Betrieb gesetzt ist **dadurch gekennzeichnet,**
daß der Fernsprechapparat (2) einen Rufsignalempfänger (3), ein Rufabstrahlorgan (4) ein Eingabevorrichtung (5) und eine Steuereinheit (7) mit einem bistabilen Schaltelement enthält und daß die Steuereinheit (7) nach Eingang eines Rufsignals, bei Betätigung der Eingabevorrichtung (5) die Steuereinheit (7) in einen zweiten Zustand gesetzt wird, in dem das bistabile Schaltelement gesetzt ist und das Rufabstrahlorgan (4) außer Betrieb ist und von dem eingehenden Rufsignal in einen ersten Zustand zurückgesetzt wird, in dem das bistabile Schaltelement zurückgesetzt ist und die Steuereinheit (7) wieder das Rufabstrahlorgan (4) in Betriebsbereitschaft setzt.

## Claims

1. Telephone set (2) in which ringing is rendered inoperative either for a specified time or for the duration of a current call, characterized in that the telephone set (2) comprises a ringing-signal receiver (3), a ringer (4), an input device (5) and a control unit (7) having a retriggerable timer and in that, after receipt of a ringing signal, the retriggerable timer in the control unit (7) is set for a specified time on actuating the input device (5) and in that, while the retriggerable timer is set, the ringer (4) is out of action and the retriggerable timer (3) is again retriggerable by incoming ringing signals.

2. Telephone set (2) in which ringing is rendered inoperative either for a specified time or for the duration of a current call, characterized in that the telephone set (2) comprises a ringing-signal receiver (3), a ringer (4), an input device (5) and a control unit (7) having a bistable switching element and in that, after receiving a ringing signal, the control unit (7) is set to a second state on actuating an input device (5), in which state the bistable switching element is set and the ringer (4) is inoperative and is reset by the incoming ringing signal to a first state in which the bistable switching element is reset and the control unit (7) sets the ringer (4) to standby.

## Revendications

1. Appareil téléphonique (2) sur lequel un rayonnement de l'appel est mis hors service soit pour un temps prédéfini soit pour la durée d'un appel en cours, caractérisé en ce que l'appareil téléphonique (2) contient un récepteur de signal d'appel (3), un organe de rayonnement d'appel (4), un dispositif d'entrée (5) et une unité de commande (7) avec un organe de temporisation déclenchable et en ce que, après la réception d'un signal d'appel et en cas d'actionnement du dispositif d'entrée (5), l'organe de temporisation redéclenchable dans l'unité de commande (7) est activé pour un temps prédéfini, et en ce que, pendant que l'organe de temporisation redéclenchable est activé, l'organe de rayonnement d'appel (4) est mis hors service et l'organe de temporisation (3) redéclenchable peut être à nouveau déclenché par des signaux d'appel arrivant.

2. Appareil téléphonique (2) sur lequel un rayonnement d'appel est mis hors service soit pour un temps prédéfini soit pour la durée d'un appel en cours, caractérisé en ce que l'appareil téléphonique (2) contient un récepteur de signal d'appel (3), un organe de rayonnement d'appel (4), un dispositif d'entrée (5) et une unité de commande (7) avec un élément de commutation bistable et en ce que, après la réception d'un signal d'appel et lors de l'actionnement du dispositif d'entrée (5), l'unité de commande (7) est mise dans un deuxième état, dans lequel l'élément de commutation bistable est activé et l'organe de rayonnement d'appel (4) est mis hors service et remis à zéro par le signal d'appel arrivant dans un premier état, dans lequel l'élément de commutation bistable est remis à zéro et l'unité de commande (7) met l'organe de rayonnement d'appel (4) à nouveau en état de fonctionnement.
